# EUROPÄISCHE PATENTSCHRIFT

(11) **EP 3 032 408 B1**
(45) Veröffentlichungstag und Bekanntmachung des Hinweises auf die Patenterteilung: **26.02.2020**
(21) Anmeldenummer: 15195284.3
(22) Anmeldetag: 19.11.2015
(51) Int. Cl.: G06F 8/30, G06F 8/51

(54) **VERFAHREN ZUR ERZEUGUNG VON LAUFFÄHIGEN APPLIKATIONEN MIT DYNAMISCHEN SKALIERBAREN VEKTORGRAFIKEN**
METHOD FOR GENERATING RUNABE APPLICATIONS COMPRISING DYNAMIC SCALABLE VECTOR GRAPHICS
PROCÉDÉ DE PRODUCTION D'APPLICATIONS EXÉCUTABLES COMPRENANT DES GRAPHIQUES VECTORIELLES DYNAMIQUES ÉVOLUTIFS

(30) Priorität: 11.12.2014 DE 102014225557
(43) Veröffentlichungstag der Anmeldung: 15.06.2016
(73) Patentinhaber: Heidelberger Druckmaschinen AG, 69115 Heidelberg (DE)
(72) Erfinder: Franke, Volkhard, 69198 Schriesheim (DE); König, Edelbert, 76709 Kronau (DE); Sailer, Markus, 74918 Angelbachtal (DE)

(56) Entgegenhaltungen:
- US-A1- 2008 134 218
- US-A1- 2008 201 695
- LEVY M R: "Compiling SVG: How and Why", SVG SCALABLE VECTOR GRAPHICS SPECIFICATION, XX, XX, 18. Juli 2003 (2003-07-18), Seiten 1-11, XP002484002,

## Beschreibung

Die vorliegende Erfindung betrifft ein Verfahren zur Erzeugung von lauffähigen Applikationen mit dynamischen skalierbaren Vektorgrafiken mit den Merkmalen des Oberbegriffs von Anspruch 1.

Die Erfindung liegt in dem technischen Gebiet der Informationstechnik.

In der Informationstechnik ist es seit längerer Zeit üblich, in grafischen Bedienoberflächen (GUIs) animierte Grafiken einzusetzen. Diese Animationen ermöglichen das intuitive Verständnis des Bedienkonzeptes der Software bzw. erleichtern dieses enorm. Zur Erstellung und Integration dieser Animationen in Grafiken gibt es viele verschiedene Ansätze. Ein verbreiteter Ansatz ist der Einsatz von skalierbaren Vektorgrafiken (SVG). Diese sind eine Spezifikation zur Beschreibung zweidimensionaler Vektorgrafiken. SVGs bestehen aus einem XML-basierten Dateiformat, wodurch computergestütztes Auslesen und Übersetzen, sowie eine automatisierte Weiterverarbeitung möglich ist. Die XML-Struktur erlaubt zudem eine einfache Integration der SVGs in Online-Anwendungen, wie z. B. Browser. Die meisten heute verwendeten Browserapplikationen unterstützen die Verwendung von SVGs, wodurch deren Verwendung im Internet weit verbreitet ist. Die Verwendung in stand-alone-Programmen, d. h. Software, die als einzelne Komponente ausführbar ist, ist schwieriger. Um eine skalierbare Vektorgrafik verwenden zu können, muss diese Software das der SVG zu Grunde liegende XML-Dokument browsen und die daraus gewonnenen Informationen über die Beschaffenheit der Grafik einsetzen, um damit das gewünschte Bild zu erstellen. Was genau die Software zur Weiterverarbeitung der Grafik tun muss, hängt dabei vom Einsatzzweck ab. In den meisten Fällen wird sie die Grafik auf einem Display darstellen; insofern hängen die weiteren Schritte der Software von der vorhandenen Zielhardware des Displays, sowie der Softwareumgebung, insbesondere dem Betriebssystem, ab. Für den Programmierer der GUI des stand-alone-Programmes besteht somit die Aufgabe, dass er den Bildinhalt jeder SVG, welche er in seiner GUI verwenden möchte, anhand der aus dem XML-file gewonnenen Informationen nachprogrammieren muss. Insbesondere bei sehr komplexen GUIs, die eine entsprechend hohe Anzahl von Grafiken und Animationen verwenden, ist der Aufwand für den einzelnen Programmierer daher unverhältnismäßig hoch. Der Verzicht auf derart aufwändig zu integrierende Vektorgrafiken ist jedoch oft keine Option, da das Design der Bedienoberfläche in den seltensten Fällen in der Verantwortung des Programmierers liegt. Insbesondere bei den angesprochenen komplexen GUIs werden diese oft von einem Designer oder einem Team von Designern entworfen und der oder die Programmierer haben dann lediglich die Aufgabe, das vorliegende Design in einem Programm umzusetzen. Durch die leicht auswertbare XML-Struktur der SVGs liegt damit eine generische Lösung des Problems auf der Hand. Diese besteht in erster Linie aus einem Codegenerator, der in diesem Fall die SVGs in XML-Struktur einliest und aus den gewonnenen Informationen einen Quelltext in der gewünschten Programmiersprache erstellt. Der Stand der Technik kennt viele solche Codegeneratoren unter dem Begriff Metaprogrammierung. In den meisten Fällen handelt es sich dabei um adaptive Programme, die selbst Programmcodes verändern bzw. erzeugen können. Es gibt jedoch auch den Ansatz eines klassischen Codegenerators, welcher Informationen über die gewünschte Funktionalität des Zielprogrammes erhält, um daraus Teile oder den gesamten Quellcode des zu erstellenden Programmes zu generieren. Die Funktion und insbesondere der Ablauf des Programmes müssen dabei so genau wie möglich beschrieben sein. Meistens werden fertige Programmmodelle, verfasst in einer Modellierungssprache wie der UML, als Inputdaten verwendet. Auch andere Dateneingangsformate wie Templates, Skripte und auch anderer Quellcode sind möglich. Die Modellierung der Funktion des Programmes kann auch in XML-Form vorliegen.

Aus der US-Patentanmeldung US 2008/ 013 4218 A1 zudem sind eine Vorrichtung und ein Verfahren für die Übersetzung von SVG's in OpenVG API Skripte bekannt. Dies umfasst eine mobile Übersetzungsvorrichtung, wobei ein Aufzeichnungsmedium das Skript speichert. Die Vorrichtung umfasst auch eine Datenanalyseeinheit, eine OpenVG-API-Skript-Erzeugungseinheit und eine Rasterbilddatenausgabeeinheit. Ein Daten-Parser analysiert Daten im SVG-Format in Abhängigkeit von Datenattributen. Die OpenVG-API-Skript- Erzeugungseinheit extrahiert eine OpenVG API-Format Syntax und erstellt eine Open VG-API-Skript. Die Rasterbilddaten -Ausgabeeinheit erzeugt dann eine Rasterbilddatei mit dem erstellten OpenVG-API-Skript.

Die US-Patentanmeldung US 2008 020 1695 A1 offenbart dagegen eine Vorrichtung zur Umwandlung von Grafikdateien aus einer Vektorgrafiksprache (zum Beispiel Scalable Vector Graphics (SVG)). Das Verfahren wird zum Beispiel verwendet für das Rendern von Videoinformationen in Mobiltelefonen, Videospiel -Konsolen, Personal Digital Assistants (PDA) oder Notebooks, sowie anderen Video-fähigen oder Audio-/Video-fähigen netzwerkfähigen Geräten.

Ebenfalls aus dem Stand der Technik bekannt ist die Umwandlung von SVG's in Codefragmente von Hochsprachen wie C++, so wie sie in der SVG Scalable vector Graphics Specification von M R Levy's "Compiling DVG: How and Why" am 18.Juli 2003 offenbart wurde.

Was der Stand der Technik jedoch nicht offenbart, ist die spezifische Codegenerierung für SVGs für die direkte Implementation des erzeugten Codes in ein Java-Programm. Spezielle das spezifische Codegenerieren der dynamischen Elemente in den SVG's ist so nicht bekannt. Was dagegen bekannt ist, sind Konvertierungen von SVGs zu FXML, einer XML-basierten Sprache, erstellt als User Interface für die Java FX-Plattform. Dabei handelt es sich jedoch nicht um eine Konvertierung von SVGs in eine höhere Programmiersprache. Dafür sind weitere Konvertierungsschritte bzw. Generierungsschritte notwendig. Zudem weisen diese Arten der Konvertierungen eine extrem schwache Performance hinsichtlich der Leistung der Codegenerierung auf, so dass sie für größere Datenmengen ungeeignet sind.

Die Aufgabe der vorliegenden Erfindung besteht also darin, einen Codegenerator für höhere Programmiersprachen, im weiteren Compiler genannt, zu erstellen, welcher animierte, skalierbare Vektorgrafiken in den Quellcode einer höheren Programmiersprache umwandelt.

Die erfindungsgemäße Lösung dieser Aufgabe stellt ein Verfahren mit den Merkmalen von Hauptanspruch 1 dar.

Es handelt sich dabei um ein Verfahren zur Erzeugung von lauffähigen Applikationen mit dynamischen skalierbaren Vektorgrafiken durch einen Compiler, welcher von einem Rechner betrieben wird, dadurch gekennzeichnet, dass dynamische Elemente der skalierbaren Vektorgrafik mindestens ein Attribut enthalten und dass der Compiler anhand dieses mindestens einen Attributes beim Kompilierungsvorgang die dynamischen Elemente der skalierbaren Vektorgrafik in Programmcode übersetzt, welcher Bestandteil des Programmcodes der lauffähigen Applikationen ist.
Der entscheidende Punkt der Erfindung ist dabei die Verbindung zwischen Design und Programmierung. Der Designer, welcher das animierte SVG entwirft, welches dann später in die GUI integriert wird, kennzeichnet die dynamischen Elemente des SVG mit einem bestimmten Attribut. Der Compiler erkennt dieses Attribut, nachdem er das SVG geparst und analysiert hat und übersetzt das Attribut, welches das dynamische Element beschreibt, in den Quellcode der Zielprogrammiersprachen. Der Programmierer muss dann lediglich den so erzeugten Quellcode in sein Programm, welches die grafische Bedienoberfläche erstellt, integrieren. Das Verfahren offenbart mehrere offensichtliche Vorteile: Am Bedeutendsten ist sicherlich, dass der Programmierer nicht mehr die dynamischen Eigenschaften des animierten SVGs nachprogrammieren und somit die Arbeit, die eigentlich bereits vom Designer verrichtet wurde, nachumsetzen muss. Dadurch führt die automatisierte Codegenerierung zu einer deutlichen Performance-Verbesserung des gesamten Softwareentwicklungsprozesses.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung ist dabei, dass der Programmcode ein für Menschen lesbarer Quelltext einer höheren Programmiersprache ist.
Der generierte Quellcode sollte in bevorzugter Weise in einer höheren Programmiersprache, wie z. B. Java oder C++, erzeugt werden. Zwar ist auch die Generierung von maschinennahem Quellcode, wie z. B. Assembler, möglich, jedoch erleichtert die Verwendung einer höheren Programmiersprache das Zusammenführen des generierten Quellcodes mit dem von menschlichen Entwicklern geschriebenem Programmcode.

Eine weitere bevorzugte Weiterbildung ist dabei, dass die vom Compiler verarbeitete skalierbare Vektorgrafik nach XML-Spezifikation aufgebaut ist.
Die SVGs bzw. ihr Standard basieren vom Format her auf dem XML-Standard. Es existiert eine Vielzahl automatisierter Interpreter zum Auswerten von XML-Code. Deren Verwendung erleichtert dabei die automatisierte Auswertung des SVGs für den Compiler.

Eine bevorzugte Weiterbildung ist dabei, dass der Compiler die XML-Datei der skalierbaren Vektorgrafik nach den Namen der dynamischen Elemente durchsucht und diese Namen das mindestens eine Attribut enthalten.
Die bereits angesprochenen Attribute werden vom Designer des SVGs in Namen des dynamischen Elementes untergebracht. Dadurch wird es dem Compiler ermöglicht, das SVG zu parsen und nach dem Namen der dynamischen Elemente zu durchsuchen. Hat es diesen Namen gefunden, extrahiert es aus den Namen das entsprechende Attribut und wertet es aus.

Eine weitere bevorzugte Weiterbildung ist dabei, dass der Compiler das mindestens eine Attribut innerhalb des Namens der dynamischen Elemente anhand eines festgelegten Trennzeichens erkennt.

Da ein dynamisches Element über mehrere Attribute verfügen kann, ist es erforderlich, ein Trennzeichnen zu definieren, mit welchem die mehreren Attribute voneinander für den Compiler erkennbar getrennt werden. Zudem muss das Attribut natürlich auch vom Rest des Namens des dynamischen Elementes getrennt werden. Dies wird ermöglicht, indem man ein Trennzeichen einsetzt, nach welchem der Compiler gezielt sucht, wenn er den Namen des dynamischen Elementes gefunden hat. Das Attribut entspricht dabei der Textzeile vom gefunden Trennzeichen bis zum Anfang des Strings bzw. bis zum vorhergehenden Trennzeichen, wenn es sich um mehrere Attribute handelt.

Eine bevorzugte Weiterbildung ist dabei, dass bei mehreren Attributen für ein dynamisches Element diese jeweils durch das festgelegte Trennzeichnen markiert sind.
Wie bereits angesprochen, sind bei mehreren vorhandenen Attributen für ein dynamisches Element diese jeweils durch das festgelegte Trennzeichen voneinander separiert.

Eine weitere bevorzugte Weiterbildung ist dabei, dass auch nicht dynamische Bestandteile der skalierbaren Vektorgrafik vom Compiler im Programmcode übersetzt werden.
Zur Komplettierung der automatischen Generierung vom Quellcode für die SVGs ist es ein naheliegender Schritt, auch die nicht animierten, d. h. nicht dynamischen Bestandteile der skalierbaren Vektorgrafik vom Compiler in Quellcode übersetzen zu lassen. Dies reduziert den Aufwand für den menschlichen Programmierer weiter.

Zur Umsetzung des offenbarten Verfahrens beinhaltet die Erfindung zudem einen Compiler zur Übersetzung dynamischer Elemente von skalierbaren Vektorgrafiken im Programmcode, dadurch gekennzeichnet, dass dynamische Elemente der skalierbaren Vektorgrafik mit einem Attribut gekennzeichnet werden und dass der Compiler anhand dieses Attributes beim Kompilierungsvorgang die dynamischen Elemente der skalierbaren Vektorgrafik in Programmcode übersetzt.

Das erfindungsgemäße Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1: den Anwendungsfall für den Compiler und den Kontext seines Einsatzes;
- Figur 2: den strukturellen Aufbau des Compilers bzw. seiner Entwicklungsumgebung;
- Figur 3: den Ablauf des erfindungsgemäßen Verfahrens;
- Figur 4: ein Beispiel eines SVGs mit inaktivem, dynamischem Element;
- Figur 5: ein Beispiel eines SVGs mit aktivem, dynamischem Element.

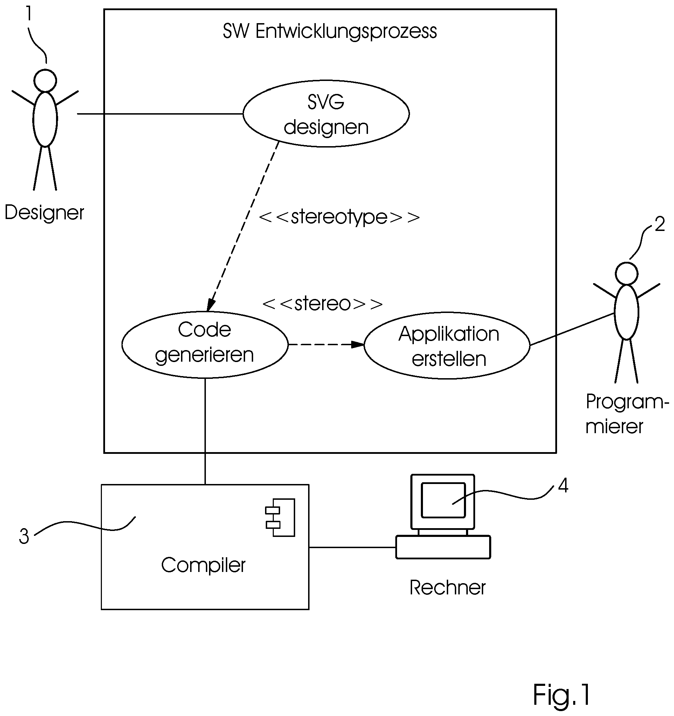

In Figur 1 ist der Anwendungsfall für den Einsatz des Compilers 3 noch einmal schematisch dargestellt. Der Designer 1 erstellt das Aussehen der grafischen Bedienoberfläche und zeichnet dafür mehrere animierte SVGs 5, wobei er sich an die vom Compiler 3 vorgegebene Namenskonvention für die Namen der dynamischen Elemente 8 halten muss. Der Compiler 3, der auf einem Rechner 4 läuft, interpretiert die vom Designer 1 erstellten SVGs 5 und erstellt aus den dynamischen Elementen 8 den gewünschten Quellcode 6 in der höheren Programmiersprache, insbesondere in Java. Der Programmierer 2 wiederum integriert den generierten Quellcode in seinen Programmcode und erstellt damit die fertige Applikation 7.

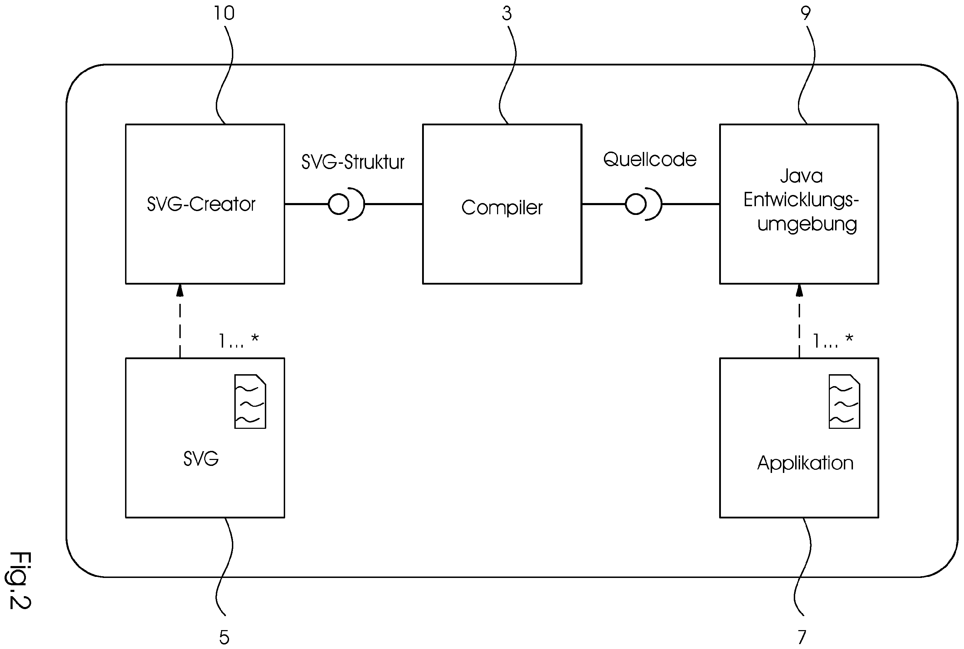

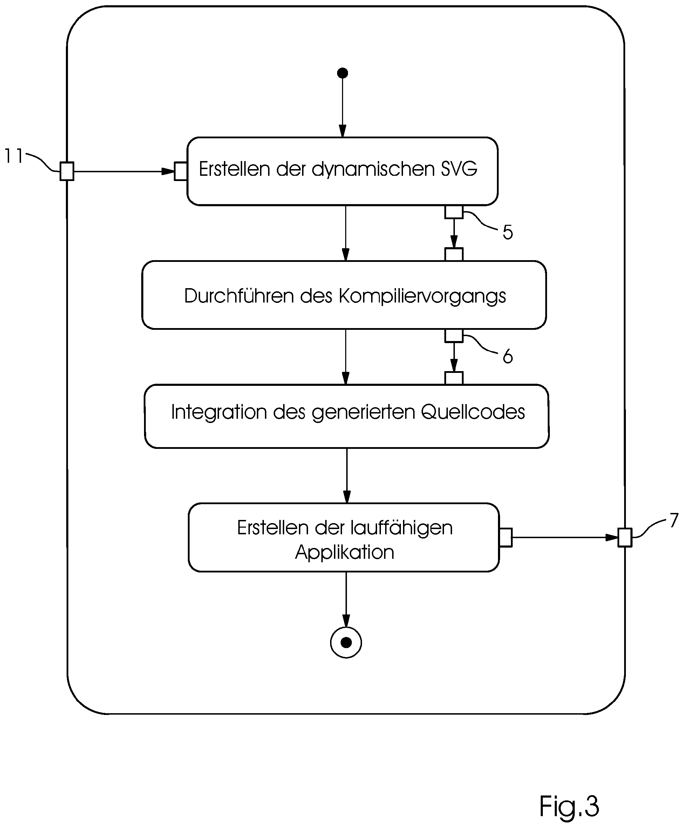

Der Aufbau der dafür notwendigen Entwicklungsumgebung ist in Figur 2 näher dargestellt. Der Designer benutzt einen SVG Creator 10, d. h. ein Programm zur Erstellung der animierten SVGs. Ein bekanntes Tool 10 dafür ist z. B. der Adobe Illustrator. Zwischen dem SVG Creator 10 und dem Compiler 3 besteht ein Interface, welches sich auf die Struktur des SVGs 5 bezieht. In dem Fall bedeutet das, dass der Compiler 3 eine bestimmte Namenskonvention bei der Benennung der dynamischen Elemente 8 des SVGs 5 erwartet. Ist dieser Namenskonvention genüge getan, so erzeugt der Compiler 3 aus den dynamischen Elementen 8 wie bereits beschrieben den Quellcode in Java. Dieser generierte Quellcode kann in der Java Entwicklungsumgebung 9 in das Gesamtprojekt integriert werden, wodurch in der Java Entwicklungsumgebung 9 die fertige Applikation, d. h. die GUI, erzeugt wird. Der Ablauf der genannten Verfahrensschritte ist noch einmal schematisch in der Figur 3 abgebildet: Der oder die Designer erstellen die gewünschten SVGs 5. Diese werden in den Compiler 3 geladen und dieser erzeugt daraus den gewünschten Quellcode in Java. Dabei parst er die XML-Struktur der SVGs 5 und ermittelt die durch Trennzeichen separierten Attribute der dynamischen Elemente 8 der SVGs 5. Aus diesen erstellt der Compiler 3 dann den Quellcode. Die Aufgabe des, bzw. der Programmierer 2 besteht dann darin, den generierten Quellcode in seinen Programmcode für die zu erstellende GUI zu integrieren. Mit dem vollständigen Programmcode wird dann die fertige und lauffähige Applikation 7 gebaut.

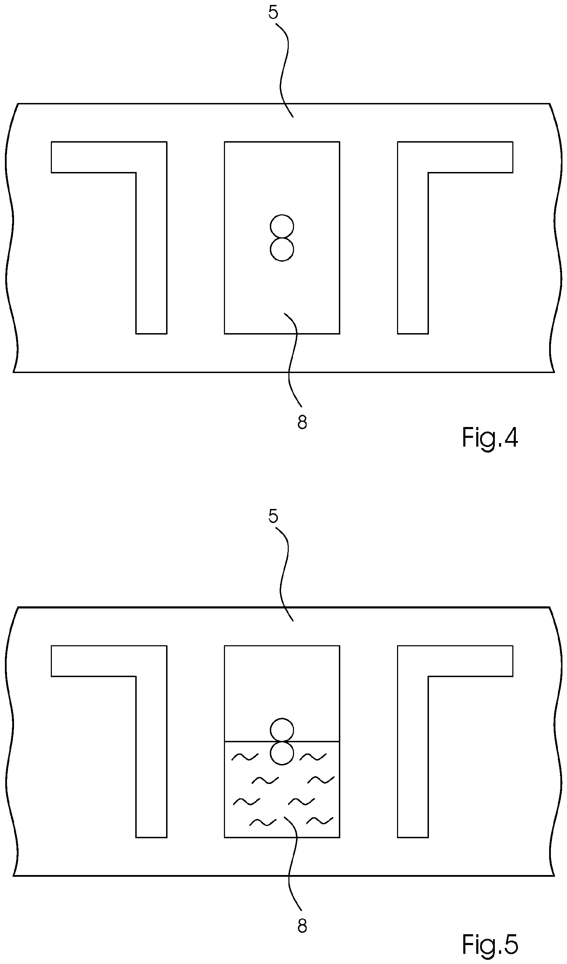

Figur 4 zeigt ein Beispiel einer SVG 5 mit einem dynamischen Element 8. In diesem Fall handelt es sich dabei um den Tintenfüllstand. Dessen Attribut ist dabei ein Integer-Wert zwischen 0 und 100. Da in der Figur 4 der Tintenfüllstand gleich Null ist, d. h. nicht vorhanden, hat das Attribut einen Wert von 0.

In Figur 5, welche das gleiche SVG 5 zeigt, ist der animierte Teil, d. h. das dynamische Element 8 dagegen aktiv. Der Füllstand ist hier bei 50 %, er kann aber auch jeden anderen Wert zwischen 0 und 100 betragen. Die Grenzen des Attributes, als in dem Fall 0 von 100 %, sind Teil des Attributes selbst. Das bedeutet, sie werden gemäß der Namenskonvention für die Attribute neben dem Namen des Attributes selbst, im Namen des dynamischen Elementes 8 zwischen den festgelegten Trennzeichen mit aufgeführt. Im vorliegenden Beispiel der Figur 5 könnte der Füllstand also auch 30% oder 60 % betragen. Der Wert von 50 % ist in diesem Fall willkürlich gewählt.

### Bezugszeichenliste

- 1: Designer
- 2: Programmierer
- 3: Compiler
- 4: Rechner
- 5: Skalierbare Vektorgrafik
- 6: Generierter Quellcode
- 7: Lauffähige Applikation
- 8: Dynamisches SVG-Element
- 9: Java-Entwicklungsumgebung
- 10: Design-Tool
- 11: GUI-Anforderungen

## Patentansprüche

1. Verfahren zur Erzeugung von lauffähigen Applikationen (7) mit dynamischen, skalierbaren Vektorgrafiken (5) durch einen Compiler (3), welcher von einem Rechner (4) betrieben wird, wobei die vom Compiler (3) verarbeitete, skalierbare Vektorgrafik (5) nach XML-Spezifikation aufgebaut ist und dynamische Elemente (8) der skalierbaren Vektorgrafik (5) mehrere Attribute enthalten,
**dadurch gekennzeichnet,**
**dass** die mehreren Attribute jeweils durch ein festgelegtes Trennzeichen markiert sind, der Compiler (3) die XML-Datei der skalierbaren Vektorgrafik (5) nach den Namen der dynamischen Elemente (8) durchsucht und diese Namen die mehreren Attribute enthalten, der Compiler (3) die mehreren Attribute innerhalb des Namens des jeweiligen dynamischen Elements (8) anhand des festgelegten Trennzeichens erkennt und dass der Compiler (3) an Hand der mehreren Attribute beim Kompilierungsvorgang die dynamischen Elemente (8) der skalierbaren Vektorgrafik (5) in Programmcode übersetzt, welcher Bestandteil des Programmcodes der lauffähigen Applikationen (7) ist.

2. Verfahren nach Anspruch 1,
**dadurch gekennzeichnet,**
**dass** der Programmcode ein für Menschen lesbarer Quelltext einer höheren Programmiersprache ist.

3. Verfahren nach einem der vorherigen Ansprüche,
**dadurch gekennzeichnet,**
**dass** auch nichtdynamische Bestandteile der skalierbaren Vektorgrafik (5) vom Compiler (3) in Programmcode übersetzt werden.

4. Compiler (3) zur Übersetzung dynamischer Elemente (8) von skalierbaren Vektorgrafiken (5) in Programmcode, wobei die vom Compiler (3) verarbeitete, skalierbare Vektorgrafik (5) nach XML-Spezifikation aufgebaut ist und dynamische Elemente (8) der skalierbaren Vektorgrafik (5) mehrere Attribute enthalten,
**dadurch gekennzeichnet,**
**dass** die mehreren Attribute jeweils durch ein festgelegtes Trennzeichen markiert sind, der Compiler (3) die XML-Datei der skalierbaren Vektorgrafik (5) nach den Namen der dynamischen Elemente (8) durchsucht und diese Namen die mehreren Attribute enthalten, der Compiler (3) die mehreren Attribute innerhalb des Namens des jeweiligen dynamischen Elements (8) anhand des festgelegten Trennzeichens erkennt und dass der Compiler (3) an Hand dieses Attributes beim Kompilierungsvorgang die dynamischen Elemente (8) der skalierbaren Vektorgrafik (5) in Programmcode übersetzt.

## Claims

1. Method for generating executable applications (7) with dynamic, scalable vector graphics (5) by means of a compiler (3) operated by a computer (4), wherein the scalable vector graphics (5) processed by the compiler (3) is in accordance with XML specifications and wherein dynamic elements (8) of the scalable vector graphics (5) include multiple attributes,
**characterized**
**in that** the multiple attributes are marked by a respective defined separator,
**in that** the compiler (3) searches the XML file of the scalable vector graphics (5) for the names of the dynamic elements (8) and these names include multiple attributes, in that the compiler (3) recognizes the multiple attributes within the name of the respective dynamic element (8) on the basis of the defined separator,
and **in that** based on the multiple attributes, in the compilation process, the compiler (3) translates the dynamic elements (8) of the scalable vector graphics (5) into programme code that is part of the programme code of the executable applications (7).

2. Method according to claim 1,
**characterized**
**in that** the programme code is a source text in a higher-level programming language that is readable by humans.

3. Method according to any one of the preceding claims,
**characterized**
**in that** non-dynamic components of the scalable vector graphics (5) are also translated into program code by the compiler (3).

4. Compiler (3) for translating dynamic elements (8) of scalable vector graphics (5) into programme code wherein the scalable vector graphics (5) processed by the compiler (3) is in accordance with XML specifications and dynamic elements (8) of the scalable vector graphics (5) contain multiple attributes,
**characterized**
**in that** the multiple attributes are marked by a respective defined separator,
**in that** the compiler (3) searches the XML file of the scalable vector graphics (5) for the names of the dynamic elements (8) and these names include the multiple attributes,
**in that** the compiler (3) recognizes the multiple attributes within the name of the respective dynamic element (8) on the basis of the defined separator,
and **in that** based on this attribute, the compiler (3) translates the dynamic elements (8) of the scalable vector graphics (5) into programme code in the compilation process.

## Revendications

1. Procédé pour la génération d'applications (7) exécutables avec des graphiques vectoriels évolutifs (5) dynamiques par un compilateur (3) exploité par un calculateur (4), pour lequel le graphique vectoriel évolutif (5) traité par le compilateur (3) présente une architecture conforme à la spécification XML et des éléments dynamiques (8) du graphique vectoriel évolutif (5) renferment plusieurs attributs,
**caractérisé en ce**
**que** les plusieurs attributs sont respectivement marqués par un caractère de séparation défini, le compilateur (3) parcourt le fichier XML du graphique vectoriel évolutif (5) à la recherche du nom des éléments dynamiques (8) et que ces noms renferment les plusieurs attributs, le compilateur (3) reconnaît les plusieurs attributs à l'intérieur du nom de l'élément dynamique (8) considéré à l'aide du caractère séparateur défini et que le compilateur (3) convertit lors de l'opération de compilation, à l'aide des plusieurs attributs, les éléments dynamiques (8) du graphique vectoriel évolutif (5) en code de programme, qui fait partie du code de programme des applications exécutables (7).

2. Procédé selon la revendication 1,
**caractérisé en ce**
**que** le code de programme est un texte source d'un langage évolué lisible par l'homme.

3. Procédé selon l'une des revendications précédentes,
**caractérisé en ce**
**que** les éléments non dynamiques du graphique vectoriel évolutif (5) sont traduits en code de programme par le compilateur (3).

4. Compilateur (3) pour la conversion d'éléments dynamiques (8) de graphiques vectoriels évolutifs (5) en code de programme, pour lequel le graphique vectoriel évolutif (5) traité par le compilateur (3) présente une architecture conforme à la spécification XML et des éléments dynamiques (8) du graphique vectoriel évolutif (5) renferment plusieurs attributs,
**caractérisé en ce**
**que** les plusieurs attributs sont respectivement marqués par un caractère de séparation défini, le compilateur (3) parcourt le fichier XML du graphique vectoriel évolutif (5) à la recherche du nom des éléments dynamiques (8) et que ces noms renferment les plusieurs attributs, le compilateur (3) reconnaît les plusieurs attributs à l'intérieur du nom de l'élément dynamique (8) considéré à l'aide du caractère séparateur défini et que le compilateur (3) convertit lors de l'opération de compilation, à l'aide de cet attribut, les éléments dynamiques (8) du graphique vectoriel évolutif (5) en code de programme.
